# EUROPEAN PATENT APPLICATION

(11) **EP 4 570 492 A1**
(43) Date of publication of application: **18.06.2025**
(21) Application number: 23872411.6
(22) Date of filing: 27.09.2023
(51) Int. Cl.: B32B 15/08, C23C 28/00

(54) **SURFACE-TREATED STEEL SHEET**

(30) Priority: 27.09.2022 JP 2022154111
(71) Applicant: NIPPON STEEL CORPORATION, Chiyoda-ku Tokyo 100-8071 (JP)
(72) Inventor: HIRAI, Akiko, Tokyo 100-8071 (JP); KAWAMURA, Yasuaki, Tokyo 100-8071 (JP); FUJII, Takashi, Tokyo 100-8071 (JP); TOSHIN, Kunihiko, Tokyo 100-8071 (JP)
(74) Representative: Vossius & Partner Patentanwälte Rechtsanwälte mbB
(86) International application number: PCT/JP2023/035131
(87) International publication number: WO 2024/071189

(57) **Abstract**

There is provided a surface-treated steel sheet having good corrosion resistance, particularly, with improved resistance to surface contact scratches caused by contact between one surface and the other surface as a further improvement in scratch resistance. There is provided a surface-treated steel sheet including: plating layers on both surfaces of a steel sheet; a first colored coating layer; and a second colored coating layer, in which the ratio of a film thickness of the second colored coating layer to a film thickness of the first colored coating layer is 0.1 or more and 0.5 or less, the first colored coating layer and the second colored coating layer contain resin particles, and the proportion of the number of the resin particles having a thickness equal to or more than the film thickness of the first colored coating layer is 1% or more and 30% or less, and the proportion of the number of the resin particles having a thickness equal to or more than the film thickness of the second colored coating layer is 50% or more and 100% or less.

## Description

### [Technical Field]

The present invention relates to a surface-treated steel sheet.

### [Background Art]

Surface-treated steel sheets, such as organic resin-coated plated steel sheets (also called pre-painted steel sheets), each made by coating a surface layer of a zinc-based plated steel sheet with an organic resin coating film, have come to be used for home appliances, building materials, automobiles, and other applications, in place of conventional post-painted products that were painted after forming. This surface-treated steel sheet is made by coating an anti-corrosion treated steel sheet or plated steel sheet with a colored organic coating, and has properties of having workability and good corrosion resistance while having beauty. After being pressed, this surface-treated steel sheet is often used as a material for home appliances, building materials, automobiles, and so on, without being further painted. For this reason, such a surface-treated steel sheet needs to have excellent scratch resistance so as not to lose its beauty during working. Therefore, various techniques have been proposed in order to improve the various properties of the surface-treated steel sheet, such as scratch resistance.

For example, Patent Document 1 listed below has disclosed a pre-painted metal sheet for electronic and electric devices that is excellent not only in scratch resistance but also in corrosion resistance and electrical conductivity. Such a pre-painted metal sheet is a metal sheet having a predetermined surface roughness, on the surface of which a chemical coating is provided, and then on one side thereof, a resin coating having a film thickness of 0.4 to 2.0 µm and containing urethane beads or fluororesin beads having an average particle diameter of 1.0 to 10 µm is provided, and on the other side thereof, a resin coating having a film thickness of 0.2 to 2.0 µm and containing urethane beads or fluororesin beads having an average particle diameter of 0.1 to 6.0 µm is provided.

### [Prior Art Document]

### [Patent Document]

Patent Document 1: Japanese Laid-open Patent Publication No. 2010-5545

### [Disclosure of the Invention]

### [Problems to Be Solved by the Invention]

Here, various types of surface-treated steel sheets, including such a pre-painted metal sheet as disclosed in Patent Document 1 described above, are generally manufactured by providing a desired paint film on a metal sheet as a base material using a continuous painting line. Examples of the metal sheet as the base material include steel sheets including various plated steel sheets, an aluminum sheet, an aluminum alloy sheet, and so on. The metal sheet with a desired paint film provided thereon is wound into a coil shape at the end of the continuous painting line, and then the metal sheet is transported to a customer in a coil state.

In such a coil state, one side of the surface coating of the surface-treated steel sheet comes into contact with the other side. In this case, there are problems such as scratches caused by contact during coil winding, blocking during coil storage, namely, pressure bonding between the coating films on the front and rear surfaces under a certain amount of pressure, and pressure marks, namely, transfer of the shape of one side to the other side. Further, there is also a problem of scratches caused by contact between one side and the other side during handling of the cut metal sheets in working at a customer's site. Furthermore, from the viewpoint of cost reduction or another factor, colored coating layers with different thicknesses are provided on both sides of the metal sheet as the base material, with the thickness on one side being thinner than that on the other side in some cases. Even in this case, there is a problem that it is necessary to ensure the scratch resistance of the other side.

In this regard, Patent Document 1 described above has disclosed the problem of the metallic particles blended to make the resin coating conductive damaging the resin coating on the opposite side that is in contact when coiling up. The technique described in Patent Document 1 described above is to prevent the damage to the resin coating film caused when coiling up by providing a resin coating film containing resin beads on both sides of the metal sheet. However, from the viewpoint of scratch resistance to optical discs, the material for the resin particles is limited to soft urethane beads or fluororesin beads with excellent slipperiness. Further, from the viewpoint of ensuring conductivity, the thickness of the resin coating film needs to be 2.0 µm or less. Therefore, there has been room for improvement in achieving both scratch resistance and resistance to surface contact scratches, as well as corrosion resistance.

Thus, the present invention has been made in consideration of the above-described problems, and an object of the present invention is to provide a surface-treated steel sheet having good corrosion resistance, particularly, with improved resistance to surface contact scratches caused by contact between one surface and the other surface as a further improvement in scratch resistance.

### [Means for Solving the Problems]

As a result of extensive research conducted by the present inventors in order to solve the above-described problems, they came up with an idea that it might be possible to further improve the scratch resistance by differentiating the composition of the paint film on one surface of the steel sheet from that on the other surface thereof, and then completed the present invention.

The gist of the present invention completed based on such an idea is as follows.

(1) A surface-treated steel sheet includes: zinc-containing plating layers located on both surfaces of a steel sheet; a first colored coating layer located on the plating layer on one surface of the steel sheet; and a second colored coating layer located on the plating layer on the other surface of the steel sheet, in which the ratio of a film thickness of the second colored coating layer to a film thickness of the first colored coating layer is 0.1 or more and 0.5 or less, the first colored coating layer and the second colored coating layer contain resin particles, and when observing a cross section of the first colored coating layer cut in a thickness direction, the length of the observed resin particle in the film thickness direction of the first colored coating layer is set as the thickness of the resin particle, and then, the proportion of the number of the resin particles having a thickness equal to or more than the film thickness of the first colored coating layer to the number of all of the observed resin particles is 1% or more and 30% or less, and when observing a cross section of the second colored coating layer cut in the thickness direction, the length of the observed resin particle in the film thickness direction of the second colored coating layer is set as the thickness of the resin particle, and then, the proportion of the number of the resin particles having a thickness equal to or more than the film thickness of the second colored coating layer to the number of all of the observed resin particles is 50% or more and 100% or less.
(2) The surface-treated steel sheet according to (1), in which when the first colored coating layer is observed in cross section, a length of 1000 µm in a direction orthogonal to the film thickness direction of the first colored coating layer is set as a first observation length, and when the sum of lengths, each of the lengths in a direction orthogonal to the film thickness direction of a portion corresponding to the resin particle when the portion occupied by the resin particle within the range of the first observation length is projected in the film thickness direction, is set as a first occupation length, the proportion of the first occupation length to the first observation length is 15% or more and 40% or less, and when the second colored coating layer is observed in cross section, a length of 1000 µm in a direction orthogonal to the film thickness direction of the second colored coating layer is set as a second observation length, and when the sum of lengths, each of the lengths in a direction orthogonal to the film thickness direction of a portion corresponding to the resin particle when the portion occupied by the resin particle within the range of the second observation length is projected in the film thickness direction, is set as a second occupation length, the proportion of the second occupation length to the second observation length is 5% or more and 15% or less.
(3) The surface-treated steel sheet according to (1) or (2), in which the film thickness of the first colored coating layer is 3 µm or more and 10 µm or less.
(4) The surface-treated steel sheet according to (1) or (2), in which the thickness of the resin particle contained in the first colored coating layer is less than twice the film thickness of the first colored coating layer, and the thickness of the resin particle contained in the second colored coating layer is less than three times the film thickness of the second colored coating layer.
(5) The surface-treated steel sheet according to (1) or (2), in which the resin particles are acrylic resin particles.
(6) The surface-treated steel sheet according to (1) or (2), in which film-forming components of the first colored coating layer and the second colored coating layer have a glass transition temperature Tg of 30°C or higher and 70°C or lower.
(7) The surface-treated steel sheet according to (1) or (2), further includes: a chemical treatment coating layer between the plating layer on one surface of the steel sheet and the first colored coating layer and a chemical treatment coating layer between the plating layer on the other surface of the steel sheet and the second colored coating layer.
(8) The surface-treated steel sheet according to (1) or (2), in which an average particle diameter of the resin particles is 3 µm or more and 15 µm or less.

### [Effect of the Invention]

According to the present invention explained above, it is possible to provide a surface-treated steel sheet having good corrosion resistance, particularly, with improved resistance to surface contact scratches caused by contact between one surface and the other surface as a further improvement in scratch resistance.

### [Brief Description of the Drawings]

[FIG. 1] FIG. 1 is an explanatory view schematically illustrating a structure of a surface-treated steel sheet according to an embodiment
[FIG. 2] FIG. 2 is an explanatory view of thicknesses of resin particles when the surface-treated steel sheet according to the embodiment is observed in cross section.
[FIG. 3] FIG. 3 is an explanatory view of an occupation length of the resin particles when the surface-treated steel sheet according to the embodiment is observed in cross section.
[FIG. 4] FIG. 4 is an explanatory view of an occupation length of the resin particles when the surface-treated steel sheet according to the embodiment is observed in cross section.

### [Embodiments for Carrying out the Invention]

Hereinafter, an embodiment according to the present invention will be explained referring to the attached drawings. Incidentally, in this description and the drawings, the same reference numerals and symbols are given to components having substantially the same functional configurations to omit duplicated explanation.

### <Regarding a surface-treated steel sheet 1>

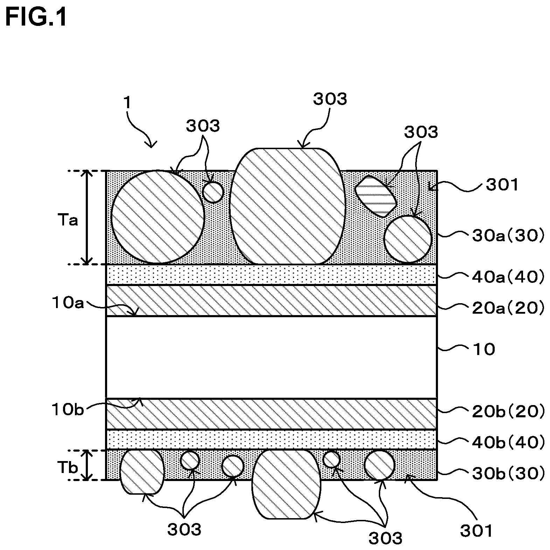

There is explained a surface-treated steel sheet according to the embodiment of the present invention in detail below with reference to FIG. 1. FIG. 1 is an explanatory view schematically illustrating a structure of the surface-treated steel sheet according to this embodiment.

### <Regarding the overall configuration of the surface-treated steel sheet 1>

As schematically illustrated in FIG. 1, the surface-treated steel sheet 1 according to this embodiment includes a steel sheet 10 as a base material, a plating layer 20 provided on the surface of the steel sheet 10, and a colored coating layer 30 located on the surface of the plating layer 20. Further, as illustrated in FIG. 1, the surface-treated steel sheet 1 further includes a chemical treatment coating layer 40 between the plating layer 20 and the colored coating layer 30 preferably. The plating layer 20, the colored coating layer 30, and the chemical treatment coating layer 40 are provided on both surfaces of the steel sheet 10. That is, on one surface (a first surface 10a) of the steel sheet 10 that is the upper surface in the drawing, a first plating layer 20a, a first colored coating layer 30a, and a first chemical treatment coating layer 40a are formed. Further, on the other surface (a second surface 10b) that is the lower surface in the drawing, a second plating layer 20b, a second colored coating layer 30b, and a second chemical treatment coating layer 40b are formed.

### <Regarding the steel sheet 10>

The steel sheet 10 as the base material is not limited in particular, and various types of steel sheet 10 can be used according to the mechanical strength or the like required for the surface-treated steel sheet 1. Examples of such a steel sheet 10 include various steel sheets 10 such as Al-killed steel, ultralow carbon steel containing Ti, Nb, and so on, and high-strength steel in which ultralow carbon steel further contains strengthening elements such as P, Si, and Mn.

Further, the thickness of the steel sheet 10 according to this embodiment is not particularly limited, and only needs to be set appropriately according to the mechanical strength or the like required for the surface-treated steel sheet 1, and can be set to, for example, about 0.2 mm to 10.0 mm.

### <Regarding the plating layer 20>

The type of plating in the plating layer 20 included in the surface-treated steel sheet 1 according to this embodiment is not particularly limited. For example, zinc-based plating can be employed as such a plating type. Examples of such zinc-based plating include zinc-nickel alloy plating, alloyed hot-dip galvanizing, aluminum-zinc alloy plating, zinc-aluminum-magnesium alloy plating, zinc-vanadium composite plating, zinc-zirconium composite plating, and so on.

Among such zinc-based platings, zinc-aluminum-magnesium alloy plating is particularly preferred, and zinc-aluminum-magnesium-silicon alloy plating, which contains Al: 4 to 22 mass%, Mg: 1 to 10 mass%, Si: 0.0001 to 2.0000 mass%, and the balance of Zn and impurities, is more preferred.

### [Al: 4 to 22 mass%]

The content of Al is set to 4 mass% or more, thereby making it possible to further improve the corrosion resistance of the steel sheet. The content of Al is more preferably 5 mass% or more. On the other hand, the content of Al is set to 22 mass% or less, thereby making it possible to further improve the corrosion resistance of the steel sheet while inhibiting saturation of such a corrosion resistance improving effect as described above. The content of Al is more preferably 16 mass% or less.

### [Mg: 1 to 10 mass%]

The content of Mg is set to 1 mass% or more, thereby making it possible to further improve the corrosion resistance of the steel sheet. The content of Mg is more preferably 2 mass% or more. On the other hand, in a plating bath used for forming the plating layer 20, the concentration of Mg is adjusted to the concentration such that the content of Mg in the plating layer 20 after manufacture is 10 mass% or less, thereby making it possible to stabilize the generation of dross in the plating bath and stably manufacture a plated steel sheet. Incidentally, in this description, the plated steel sheet refers to the steel sheet 10 having the plating layer 20 formed on the surface thereof. In the plating bath used for forming the plating layer 20, it is more preferable to adjust the concentration of Mg to the concentration such that the content of Mg in the plating layer 20 after manufacture is 5 mass% or less.

### [Si: 0.0001 to 2.0000 mass%]

The content of Si is set to 0.0001 mass% or more, thereby making it possible to further improve the adhesion of the plating layer 20 (more specifically, the adhesion between the base steel sheet 10 and the plating layer 20). On the other hand, the content of Si is set to 2.0000 mass% or less, thereby making it possible to further improve the adhesion of the plating layer 20 while inhibiting saturation of the adhesion improving effect of the plating layer 20. The content of Si is more preferably 1.6000 mass% or less.

Further, the zinc-containing plating layer 20 may contain 1 mass% or less of elements such as Fe, Sb, and Pb either alone or in combination, in place of part of Zn of the balance.

As the plated steel sheet with the plating layers 20 each having such chemical components as above provided thereon, for example, there can be cited a hot-dip zinc-aluminum-magnesium-silicon alloy-plated steel sheet (for example, "SUPERDYMA (registered trademark)" manufactured by NIPPON STEEL CORPORATION), or the like, such as a plated steel sheet including a Zn-11%Al-3%Mg-0.2%Si alloy plating layer.

Such a plating layer 20 as explained above can be manufactured as follows, for example. First, the surface of the prepared steel sheet 10 is subjected to pretreatment such as cleaning and degreasing as necessary. Then, the steel sheet 10 that has been subjected to the pretreatment as necessary is immersed in a hot-dip plating bath having desired chemical components, and the steel sheet 10 is pulled out of such a plating bath. In such a plating operation, the plating may be performed by either a continuous plating method of coils or a plating method of a single cut sheet.

The temperature of the hot-dip plating bath varies depending on the composition, but preferably falls within a range of 400 to 500°C, for example.

Further, the plating coating weight of such a plating layer 20 as above can be controlled by adjusting the speed of pulling out the steel sheet 10, the flow rate and flow velocity of a wiping gas sprayed from a wiping nozzle provided above the plating bath, or the like. The plating coating weight of the plating layer 20 is preferably 30 g/m² or more in total on both surfaces of the steel sheet 10 (namely, 15 g/m² or more per side). The coating weight is set to 30 g/m² or more, thereby making it possible to reliably ensure the corrosion resistance of the zinc-based plated steel sheet 10. The plating coating weight is more preferably 40 g/m² or more in total on both surfaces of the steel sheet 10. On the other hand, the plating coating weight is preferably 600 g/m² or less in total on both surfaces of the steel sheet 10 (namely, 300 g/m² or less per side). The coating weight is set to 600 g/m² or less, thereby making it possible to achieve a further improvement in the corrosion resistance while ensuring surface smoothness of the Zn-containing plating layer 13. The plating coating weight is more preferably 550 g/m² or less in total on both surfaces of the steel sheet 10.

After the coating weight of the hot-dip plating is adjusted, the steel sheet is cooled. At this time, there is no need to limit the cooling conditions in particular.

### <Regarding the colored coating layer 30>

The colored coating layer 30 is a coating layer that is colored to a desired color by containing a color pigment. The surface-treated steel sheet 1 according to this embodiment includes, as the colored coating layer 30, the first colored coating layer 30a formed on the first surface 10a of the steel sheet 10, and the second colored coating layer 30b formed on the second surface 10b. When explaining the configuration common to the first colored coating layer 30a and the second colored coating layer 30b below, they are collectively referred to simply as the colored coating layer 30 in some cases.

Such a colored coating layer 30 contains a film-forming component 301 and resin particles 303, as schematically illustrated in FIG. 1. Here, when observing a cross section of the surface-treated steel sheet 1 cut in the film thickness direction of the colored coating layer 30 (to be referred to as a cross-sectional observation below), in both the first colored coating layer 30a and the second colored coating layer 30b, at least a part of such resin particles 303 has a thickness equal to or more than the film thickness of the first colored coating layer 30a or the second colored coating layer 30b. In other words, such resin particles 303 are contained at a desired number proportion of the number of resin particles 303 having a thickness equal to or more than the film thickness of the colored coating layer 30 to the number of all resin particles 303 observed in the cross-sectional observation (to be described later). The colored coating layer 30 containing the resin particles 303 having a thickness equal to or more than the film thickness of the colored coating layer 30 is provided in this manner, thereby making the resin particles 303 protruding from the surface of the colored coating layer 30 present. As a result, when the colored coating layer 30 comes into contact with any surface, the contact is not with the entire colored coating layer 30, but with the resin particles 303. In other words, the contact with any surface is not surface contact with the entire colored coating layer 30, but point contact with the resin particle 303 protruding from the colored coating layer 30. This makes it possible to improve the scratch resistance (more specifically, resistance to surface contact scratches) of the surface-treated steel sheet 1 according to this embodiment.

The cross-sectional observation can be performed as follows, for example. The surface-treated steel sheet 1 is embedded in a room-temperature drying-type epoxy resin in a direction vertical to the paint film thickness direction, and the embedded surface is mechanically polished and then observed with a SEM (scanning electron microscope).

As schematically illustrated in FIG. 1, such colored coating layers 30 are provided to make a film thickness Tb of the second colored coating layer 30b thinner than a film thickness Ta of the first colored coating layer 30a. Specifically, the ratio Tb/Ta of the film thickness Tb of the second colored coating layer 30b to the film thickness Ta of the first colored coating layer 30a is 0.1 or more and 0.5 or less. The ratio Tb/Ta is set to fall within this range, thereby making it possible to achieve a desired number proportion of resin particles 303 having a thickness that is equal to or more than the film thickness of the colored coating layer 30 in cross-sectional observation to be described later.

In this embodiment, the film thickness Ta of the first colored coating layer 30a is preferably 3.0 µm or more. Further, the film thickness Tb of the second colored coating layer 30b is preferably 0.3 µm or more based on the above-described ratio Tb/Ta. This makes it possible to further improve the resistance to surface contact scratches. The film thickness Ta of the first colored coating layer 30a is more preferably 4.0 µm or more. On the other hand, the film thickness Ta of the first colored coating layer 30a is preferably 10.0 µm or less. The film thickness Ta of the first colored coating layer 30a is set to 10.0 µm or less, thereby making it possible to inhibit the occurrence of paint film defects such as bubbles and obtain a stable appearance while keeping costs low. The film thickness Ta of the first colored coating layer 30a is more preferably 8.0 µm or less. Further, the upper limit of the film thickness Tb of the second colored coating layer 30b is determined from the upper limit value of the film thickness Ta of the first colored coating layer 30a based on the above-described ratio Tb/Ta.

Incidentally, the film thickness (Ta, Tb) of such a colored coating layer 30 can be measured by the cross-sectional observation. The film thickness of each of the first colored coating layer 30a and the second colored coating layer 30b may be measured at any number of positions (for example, 10 positions), and the average value of a plurality of obtained film thicknesses may be set as the film thickness (Ta, Tb).

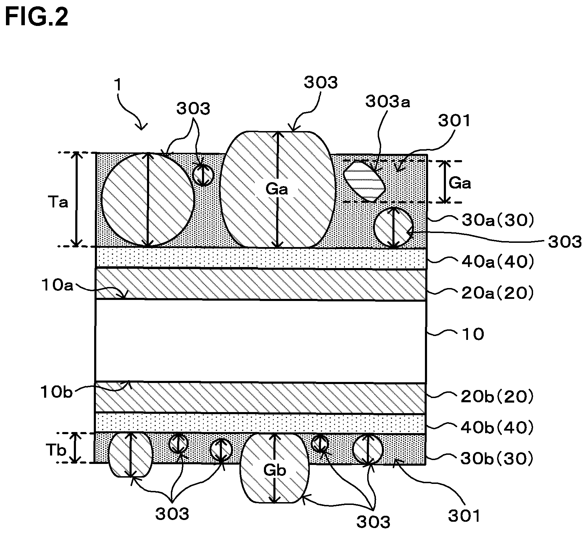

Next, the thickness of the resin particle 303 in the cross-sectional observation is explained using FIG. 2. FIG. 2 is an explanatory view for explaining thicknesses of the resin particles 303 when the surface-treated steel sheet 1 according to this embodiment is observed in cross section.

In FIG. 2, the thickness of the resin particle 303 refers to the length of each resin particle 303 in the film thickness direction of the colored coating layer 30 (the double-ended arrow illustrated in the resin particle 303 in FIG. 2). More specifically, in FIG. 2, regarding a flat resin particle 303a present in a tilted state, the resin particle 303a is projected in a direction vertical to the film thickness direction (the dashed line direction in FIG. 2), and the length in the film thickness direction in this projection is regarded as the length in the film thickness direction, which is set as the thickness of the resin particle 303a. In the following, the thickness of the resin particle 303 contained in the first colored coating layer 30a is referred to as a first thickness Ga. Further, the thickness of the resin particle 303 contained in the second colored coating layer 30b is referred to as a second thickness Gb.

In this embodiment, the proportion of the number of resin particles 303 having the first thickness Ga (Ga ≥ Ta) that is equal to or more than the film thickness Ta of the first colored coating layer 30a to the number of all resin particles 303 within the observation field of view in the cross-sectional observation of the first colored coating layer 30a is 1% or more and 30% or less. On the other hand, the proportion of the number of resin particles 303 having the second thickness Gb (Gb ≥ Tb) that is equal to or more than the film thickness Tb of the second colored coating layer 30b to the number of all resin particles 303 within the observation field of view in the cross-sectional observation of the second colored coating layer 30b is 50% or more and 100% or less. As illustrated in FIG. 2, the resin particle 303 having a thickness equal to or more than the film thickness of the colored coating layer 30 protrudes from the surface of the colored coating layer 30.

Incidentally, the proportion of the number of resin particles 303 having the first thickness Ga (Ga ≥ Ta) that is equal to or more than the film thickness Ta of the first colored coating layer 30a to the number of all resin particles 303 within the observation field of view in the cross-sectional observation of the first colored coating layer 30a and the proportion of the number of resin particles 303 having the second thickness Gb (Gb ≥ Tb) that is equal to or more than the film thickness Tb of the second colored coating layer 30b to the number of all resin particles 303 within the observation field of view in the cross-sectional observation of the second colored coating layer 30b are calculated by performing observation for 500 µm or more in total in a direction orthogonal to the film thickness direction of the colored coating layer 30a and the colored coating layer 30b, respectively.

As above, this embodiment is configured to make the proportion of the number of resin particles 303 having the second thickness Gb (Gb ≥ Tb) that is equal to or more than the film thickness Tb of the second colored coating layer 30b larger than the proportion of the number of resin particles 303 having the first thickness Ga (Ga ≥ Ta) that is equal to or more than the film thickness Ta of the first colored coating layer 30a. This results in a sufficiently large number of resin particles 303 protruding from the second colored coating layer 30b in particular. Therefore, even when the first colored coating layer 30a and the second colored coating layer 30b come into contact with each other, the surface contact between the both coatings is significantly inhibited. As a result, it is possible to inhibit scratches caused by the surface contact between the both coatings, blocking during coil storage, pressure marks, and the like.

When the proportion of the number of resin particles 303 having the first thickness Ga (Ga ≥ Ta) that is equal to or more than the film thickness Ta of the first colored coating layer 30a is less than 1%, or the proportion of the number of resin particles 303 having the second thickness Gb (Gb ≥ Tb) that is equal to or more than the film thickness Tb of the second colored coating layer 30b is less than 50%, the function of inhibiting surface contact between the first colored coating layer 30a and the second colored coating layer 30b is not sufficient, and thus the effect of inhibiting surface contact scratches is not sufficient. The proportion of the number of resin particles 303 having the first thickness Ga (Ga ≥ Ta) that is equal to or more than the film thickness Ta of the first colored coating layer 30a is preferably 3% or more and more preferably 5% or more. Further, the proportion of the number of resin particles 303 having the second thickness Gb (Gb ≥ Tb) that is equal to or more than the film thickness Tb of the second colored coating layer 30b is preferably 55% or more and more preferably 60% or more.

Further, when the proportion of the number of resin particles 303 having the first thickness Ga (Ga ≥ Ta) that is equal to or more than the film thickness Ta of the first colored coating layer 30a is greater than 30%, the number of resin particles 303 protruding from the surface of the colored coating layer 30 is too large, and thus the work adhesion decreases. The work adhesion refers to the ability of a coating such as the colored coating layer 30 to be maintained in an adhesion state without peeling off at a worked portion.

The proportion of the number of resin particles 303 having the first thickness Ga (Ga ≥ Ta) that is equal to or more than the film thickness Ta of the first colored coating layer 30a to the number of all resin particles 303 within the observation field of view in the cross-sectional observation of the first colored coating layer 30a is preferably 20% or less and more preferably 15% or less. Incidentally, the upper limit of the proportion of the number of resin particles 303 having the second thickness Gb (Gb ≥ Tb) that is equal to or more than the film thickness Tb of the second colored coating layer 30b is not particularly limited, and may be 100%. The proportion of the number of resin particles 303 having the second thickness Gb (Gb ≥ Tb) that is equal to or more than the film thickness Tb of the second colored coating layer 30b to the number of all resin particles 303 within the observation field of view in the cross-sectional observation of the second colored coating layer 30b is preferably 95% or less and more preferably 90% or less.

In the first colored coating layer 30a, the content of the resin particles 303 is preferably 3 mass% or more relative to the total content of the film-forming component 301 and the resin particles 303. This makes it possible to further improve the scratch resistance. The content of the resin particles 303 in the first colored coating layer 30a is more preferably 5 mass% or more. On the other hand, the content of the resin particles 303 in the first colored coating layer 30a is preferably 40 mass% or less relative to the total content of the film-forming component 301 and the resin particles 303. This makes it possible to further improve the scratch resistance. When the content of the resin particles 303 in the first colored coating layer 30a is greater than 40 mass%, the proportion of film-forming components to the colored coating film becomes lower and the barrier property as the coating decreases to make it difficult to exhibit desired corrosion resistance. The content of the resin particles 303 in the first colored coating layer 30a is more preferably 35 mass% or less.

Further, in the second colored coating layer 30b, the content of the resin particles 303 is preferably 3 mass% or more relative to the total content of the film-forming component 301 and the resin particles 303. This makes it possible to further improve the scratch resistance. The content of the resin particles 303 in the second colored coating layer 30b is more preferably 5 mass% or more. On the other hand, the content of the resin particles 303 in the second colored coating layer 30b is preferably 40 mass% or less relative to the total content of the film-forming component 301 and the resin particles 303. This makes it possible to further improve the scratch resistance. When the content of the resin particles 303 in the second colored coating layer 30b is greater than 40 mass%, the proportion of film-forming components to the colored coating film becomes lower and the barrier property as the coating decreases to make it difficult to exhibit desired corrosion resistance. The content of the resin particles 303 in the second colored coating layer 30b is more preferably 35 mass% or less.

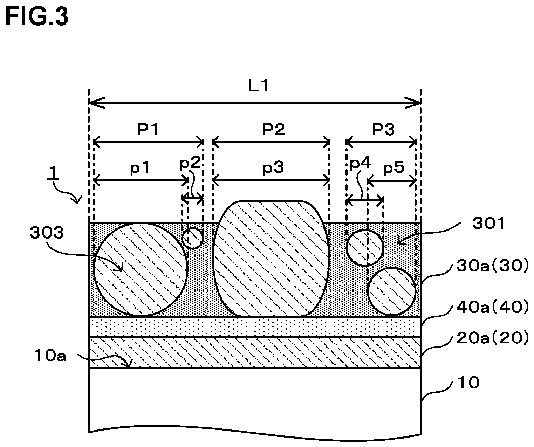

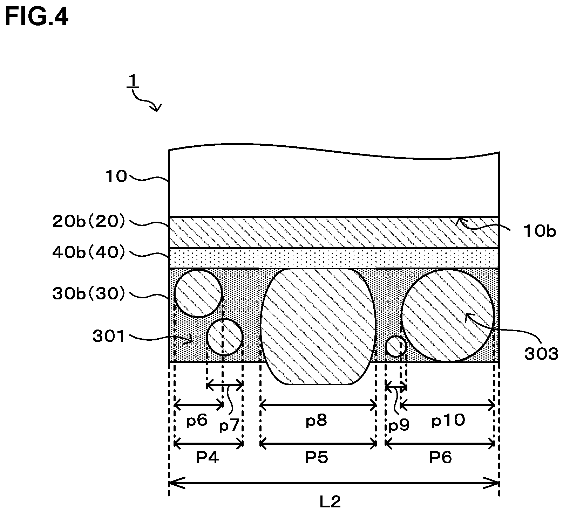

Next, as a preferred configuration of the surface-treated steel sheet 1 according to this embodiment, the occupation length of the resin particle 303 is explained with reference to FIG. 3 and FIG. 4. FIG. 3 and FIG. 4 are explanatory views for explaining an occupation length of the resin particles 303 when the surface-treated steel sheet 1 according to this embodiment is observed in cross section.

In FIG. 3, when the first colored coating layer 30a is observed in cross section, the observation range in a direction orthogonal to the film thickness direction of the first colored coating layer 30a is set as a first observation length L1. Further, within the range of the first observation length L1, portions p1, p2, p3, p4, and p5 occupied by the resin particles 303 are projected in the film thickness direction. According to this projection, the portions p1 and p2, and the portions p4 and p5 partially overlap, and a projection P1 corresponding to the portions p1 and p2, a projection P2 corresponding to the portion p3, and a projection P3 corresponding to the portions p4 and p5 are obtained. The sum P1 + P2 + P3 of the lengths of these projections P1, P2, and P3 is set as a first occupation length D1. In this case, the proportion of the first occupation length D1 to the first observation length L1 (D1/L1 × 100) is preferably 15% or more and 40% or less.

Further, in FIG. 4, similarly, when the second colored coating layer 30b is observed in cross section, the observation range in a direction orthogonal to the film thickness direction of the second colored coating layer 30b is set as a second observation length L2. Further, within the range of the second observation length L2, portions p6, p7, p8, p9, and p10 occupied by the resin particles 303 are projected in the film thickness direction. According to this projection, the portions p6 and p7, and the portions p9 and p10 partially overlap, and a projection P4 corresponding to the portions p6 and p7, a projection P5 corresponding to the portion p8, and a projection P6 corresponding to the portions p9 and p10 are obtained. The sum P4 + P5 + P6 of the lengths of these projections P4, P5, and P6 is set as a second occupation length D2. In this case, the proportion of the second occupation length D2 to the second observation length L2 (D2/L2 × 100) is preferably 5% or more and 15% or less. Incidentally, the first observation length L1 and the second observation length L2 is set to 1000 µm.

The proportion of the first occupation length D1 to the first observation length L1 is set to 15% or more, thereby making it possible to further improve the scratch resistance. The proportion of the first occupation length D1 to the first observation length L1 is more preferably 20% or more. On the other hand, the proportion of the first occupation length D1 to the first observation length L1 is set to 40% or less, thereby making it possible to further improve the corrosion resistance. When the proportion of the first occupation length D1 to the first observation length L1 is greater than 40%, the proportion of the film-forming component 301 to the first colored coating layer 30a becomes lower and the barrier property as the coating decreases to make it difficult to exhibit desired corrosion resistance in some cases. The proportion of the first occupation length D1 to the first observation length L1 is more preferably 35% or less.

The proportion of the second occupation length D2 to the second observation length L2 is set to 5% or more, thereby making it possible to further improve the scratch resistance. The proportion of the second occupation length D2 to the second observation length L2 is more preferably 7% or more. On the other hand, the proportion of the second occupation length D2 to the second observation length L2 is preferably set to 15% or less. This makes it possible to further improve the scratch resistance. The reason for this is that, from one perspective, of the steel sheet 10, the second surface 10b is thinner than the first surface 10a, and thus when the proportion of the second occupation length D2 to the second observation length L2 is greater than 15%, the proportion of resin particles having a particle diameter equal to or more than the film thickness of the second surface 10b is large. When the proportion of resin particles having a particle diameter equal to or more than the film thickness is large, it is difficult to retain the resin particles in the coating and the resin particles 303 tend to come off from the second surface 10b during surface contact, which becomes the starting point of scratches in some cases. Further, from another perspective, when the proportion of the second occupation length D2 to the second observation length L2 is greater than 15%, the effect of improving scratch resistance saturates, while the proportion of the film-forming component 301 to the second colored coating layer 30b becomes lower and the barrier property as the coating decreases to make it difficult to exhibit desired corrosion resistance on the second surface 10b of the steel sheet 10 in some cases. From the viewpoint of further improving the scratch resistance or further improving the corrosion resistance on the second surface 10b of the steel sheet 10, the proportion of the second occupation length D2 to the second observation length L2 is more preferably 13% or less.

The film-forming component 301 of the colored coating layer 30 according to this embodiment can be made of any material as long as it functions as a binder for the resin particles 303. However, from the viewpoint of simplicity and cost-effectiveness of manufacture, it is preferable to use various organic resins. Examples of such a film-forming component 301 include acrylic resins, polyester resins, urethane resins, fluorine-based resins, and so on. Further, when resin particles made of an organic resin are used as the resin particles 303, the same type of resin as such resin particles is preferably selected as the film-forming component 301. This improves the affinity between the film-forming component 301 and the resin particles 303 to make it possible to further improve the scratch resistance and the adhesion of the colored coating layer 30.

Further, the film-forming component 301 according to this embodiment is preferably an organic resin having a glass transition temperature Tg of 30°C or higher. Such a resin having the glass transition temperature Tg as described above is used as the film-forming component 301, thereby making it possible to cause the colored coating layer 30 to have a more appropriate hardness and further improve the scratch resistance (particularly, resistance to scratching) of the surface-treated steel sheet 1.

The glass transition temperature Tg of the film-forming component 301 is preferably 35°C or higher, and more preferably 40°C or higher. On the other hand, the upper limit value of the glass transition temperature Tg is not particularly specified, but when it exceeds 70°C, workability may decrease. Therefore, the glass transition temperature Tg of the film-forming component 301 is preferably 70°C or lower.

Incidentally, such a glass transition temperature Tg can be determined, for example, by a method using TMA (thermomechanical analysis), in which a needle is inserted into the surface of a coating being an object to be measured in the direction of the coating thickness and a constant temperature change is caused to measure the change in thermal expansion of the object to be measured, a method using DMA (dynamic viscoelasticity measurement), in which a coating being an object to be measured, which has been peeled off from a base material, is subjected to a constant temperature change while being subjected to periodic deformation, to analyze the viscoelasticity, or another method.

The resin particles 303 of the colored coating layer 30 according to this embodiment are preferably resin particles made of an organic resin. Using such resin particles makes it possible to mitigate the impacts applied to the colored coating layer 30 due to the toughness and ductility that the resin particles have, thereby further improving the scratch resistance. Examples of such resin particles include acrylic resin particles, polyester resin particles, urethane resin particles, fluorine-based resin particles, silicone resin particles, polyolefin resin particles, and so on, but it is more preferable to use acrylic resin particles. Further, the color pigment contained in the colored coating layer 30 itself may function as the resin particles 303 as described above.

In this embodiment, some of the resin particles 303 have a thickness equal to or more than the film thickness of the colored coating layer 30, and the others of them do not. Therefore, as the resin particles 303, resin particles with variations in particle diameter are used. The average particle diameter is preferably 3 to 15 µm. The resin particles 303 have the average particle diameter as above, thereby making it possible to further improve the scratch resistance of the surface-treated steel sheet 1. Here, the average particle diameter of the resin particles 303 is different from the thickness of the resin particles 303 defined above, and means the average value calculated from the equivalent circle diameter of each of the resin particles observed by cross-sectional observation. Specifically, the average particle diameter of the resin particles 303 can be determined by measuring the particle diameters of the resin particles 303 observed at any plural positions (for example, 10 positions) in the cross-sectional observation, and setting the average value of the obtained plural particle diameters as the average particle diameter of the resin particles 303. Incidentally, the resin particles 303 with variations in particle diameter include the case where plural resin particles 303 with no variations in particle diameter are mixed and used.

Further, it is preferable that the thickness Ga of the resin particle 303 contained in the first colored coating layer 30a should be less than 2.0 times the film thickness Ta of the first colored coating layer, and that the thickness Gb of the resin particle 303 contained in the second colored coating layer 30b should be less than 3.0 times the film thickness Tb of the second colored coating layer. Such a relationship between the thickness of the resin particle 303 and the film thickness of the colored coating layer 30 as above makes it possible to further improve the scratch resistance of the surface-treated steel sheet 1. The thickness Ga of the resin particle 303 contained in the first colored coating layer 30a is preferably less than 1.5 times the film thickness Ta of the first colored coating layer. Further, the thickness Gb of the resin particle 303 contained in the second colored coating layer 30b is preferably less than 2.5 times the film thickness Tb of the second colored coating layer.

### ◇ Regarding other components in the colored coating layer 30

In addition to such components as described above, the colored coating layer 30 according to this embodiment may further contain a crosslinking agent.

The colored coating layer 30 according to this embodiment further contains a crosslinking agent, thereby making it possible to further improve the barrier property of the colored coating layer 30 itself and further improve the scratch resistance and the corrosion resistance as the surface-treated steel sheet 1. In particular, the colored coating layer 30 contains at least one of a melamine resin and an isocyanate resin as the crosslinking agent, thereby making it possible to further improve the scratch resistance and the corrosion resistance as the surface-treated steel sheet 1. The content of such a crosslinking agent is preferably set to about 10 to 40 mass% as a percentage in the film-forming component 301, for example.

Incidentally, the color pigment contained in the colored coating layer 30 is not particularly limited, and various well-known pigments can be appropriately used depending on the color tone desired for the colored coating layer 30. Examples of such color pigments include an aluminum pigment, carbon black, TiO₂, and so on. Further, the content of such color pigments can also be set appropriately, which is about 3 to 60 mass%, for example.

Such a colored coating layer 30 can be formed by applying a paint component containing the components that form such a colored coating layer 30 as described above onto the surface of the steel sheet 10, onto the plated surface, onto the surface of the steel sheet 10 including the chemical treatment coating 40, or onto the plated surface including the chemical treatment coating 40, and then baking the applied component at a temperature of 150°C or higher and lower than 300°C, followed by hardening and drying. When the baking temperature is lower than 150°C, bake hardening is insufficient and the corrosion resistance and the scratch resistance of the paint film may decrease, and when the baking temperature is 300°C or higher, thermal degradation of the resin component may occur to cause a decrease in workability.

Incidentally, the application of such a paint component as described above can be performed by a commonly well-known coating method, such as, for example, roll coating, curtain flow coating, air spray, airless spray, immersion, bar coating, brush coating, or the like. Among these coating methods, roll coating is particularly preferred.

Further, the colored coating layer 30 may further contain additives such as an anti-corrosive pigment, surface-modified metal powders or glass powders, a dispersing agent, a leveling agent, wax, and aggregates, a diluting solvent, and so on as necessary, within the range that does not impair the above-described effects.

Here, when the anti-corrosive pigment is contained, its content is preferably set to 1 to 15 mass%, for example. Further, as the anti-corrosive pigment to be used, various well-known anti-corrosive pigments can be used.

### ◇ Regarding the hardness of the colored coating layer 30

It is preferable that such a colored coating layer 30 should have a Vickers hardness of 10 to 70 Hv, which is measured at an indentation depth of three-quarters of the thickness of the coating from the surface layer (regarding the test load, a size capable of achieving a desired indentation depth is set according to the hardness of the colored coating layer 30). Such a Vickers hardness is measured using a universal hardness tester (manufactured by Helmut Fischer Gmbh). The hardness is measured from the surface of the coating at any 10 positions under such indentation depth conditions as described above, regardless of the position where the resin particle 303 is present or absent, and the average of 10 measured values obtained is calculated. The colored coating layer 30 has such a Vickers hardness as described above, thereby making it possible to further improve the scratch resistance. The above-described Vickers hardness exhibited by the colored coating layer 30 is more preferably 15 to 65 Hv.

### <Regarding the chemical treatment coating layer 40>

The chemical treatment coating layer 40 according to this embodiment is a coating layer that can be located between the steel sheet 10 and the colored coating layer 30, and is a layer formed by what is called a chemical treatment.

As a detailed configuration of the chemical treatment coating layer 40 according to this embodiment, there can be cited, for example, a configuration containing one or more selected from the group consisting of a resin, a silane coupling agent, a zirconium compound, silica, phosphoric acid and its salts, fluoride, a vanadium compound, and tannin or tannic acid. These substances are contained, and thereby the film formability after application of a chemical treatment solution, the barrier property (denseness) of the coating against corrosive factors such as moisture and corrosive ions, the film adhesion to the plated surface, and so on further improve, which contributes to the improvement in the corrosion resistance of the coating.

In particular, when the chemical treatment coating layer 40 contains one or more of a silane coupling agent and a zirconium compound, a crosslinked structure is formed within the chemical treatment coating layer 40 to also strengthen the bond with the plated surface, thus making it possible to further improve the adhesion or the barrier property of the coating.

Further, when containing one or more of silica, phosphoric acid and its salts, fluoride, and a vanadium compound, the chemical treatment coating layer 40 functions as an inhibitor, and a precipitate coating or a passive coating is formed on the plating or steel surface, thereby making it possible to further improve the corrosion resistance.

The components that can be contained in such a chemical treatment coating layer 40 as described above each will be explained in detail with reference to examples.

### [Resin]

The resin is not particularly limited, and for example, well-known organic resins such as a polyester resin, a polyurethane resin, an epoxy resin, a phenol resin, an acrylic resin, and a polyolefin resin can be used. To further improve the adhesion to the plated steel sheet for pre-painted steel sheets, it is preferable to use at least one of resins having forced sites or polar functional groups in a molecular chain (such as a polyester resin, a urethane resin, an epoxy resin, and an acrylic resin). The resins may be used alone or in combination of two or more.

The content of the resin in the chemical treatment coating layer 40 is preferably 0 mass% or more and more preferably 1 mass% or more relative to the coating solid content, for example. Further, the content of the resin in the chemical treatment coating layer 40 is preferably 85 mass% or less, more preferably 60 mass% or less, and further preferably 40 mass% or less relative to the coating solid content, for example. When the content of the resin exceeds 85%, the proportion of the other coating components decreases, resulting in that the performance required as the coating other than corrosion resistance may decrease.

### [Silane coupling agent]

Examples of the silane coupling agent include γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropylmethyldimethoxysilane, γ-methacryloxypropyltrimethoxysilane, γ-methacryloxypropylmethyldimethoxysilane, γ-methacryloxypropyltriethoxysilane, γ-methacryloxypropylmethyldiethoxysilane, N-β-(N-vinylbenzylaminoethyl)-γ-aminopropyltrimethoxysilane, N-β-(N-vinylbenzylaminoethyl)-γ-aminopropylmethyldimethoxysilane, N-β-(N-vinylbenzylaminoethyl)-γ-aminopropyltriethoxysilane, N-β-(N-vinylbenzylaminoethyl)-γ-aminopropylmethyldiethoxysilane, γ-glycidoxypropyltrimethoxysilane, γ-glycidoxypropylmethyldimethoxysilane, γ-glycidoxypropyltriethoxysilane,γ-glycidoxypropylmethyldiethoxysilane, γ-mercaptopropyltrimethoxysilane, γ-mercaptopropylmethyldimethoxysilane, γ-mercaptopropyltriethoxysilane, γ-mercaptopropylmethyldiethoxysilane, methyltrimethoxysilane, dimethyldimethoxysilane, methyltriethoxysilane, dimethyldiethoxysilane, vinyltriacetoxysilane, γ-chloropropyltrimethoxysilane, γ-chloropropylmethyldimethoxysilane, γ-chloropropyltriethoxysilane, γ-chloropropylmethyldiethoxysilane, hexamethyldisilazane, γ-anilinopropyltrimethoxysilane, γ-anilinopropylmethyldimethoxysilane, γ-anilinopropyltriethoxysilane, γ-anilinopropylmethyldiethoxysilane, vinyltrimethoxysilane, vinylmethyldimethoxysilane, vinyltriethoxysilane, vinylmethyldiethoxysilane, octadecyldimethyl[3-(trimethoxysilyl)propyl]ammonium chloride, octadecyldimethyl[3-(methyldimethoxysilyl)propyl]ammonium chloride, octadecyldimethyl[3-(triethoxysilyl)propyl]ammonium chloride, octadecyldimethyl[3-(methyldiethoxysilyl)propyl]ammonium chloride, γ-chloropropylmethyldimethoxysilane, γ-mercaptopropylmethyldimethoxysilane, methyltrichlorosilane, dimethyldichlorosilane, trimethylchlorosilane, and so on. The added amount of the silane coupling agent in a chemical treatment solution for forming the chemical treatment coating layer 40 can be set to 2 to 80 g/L, for example. When the added amount of the silane coupling agent is less than 2 g/L, the adhesion to the plated surface may be insufficient, leading to a decrease in the work adhesion of the paint film. Further, when the added amount of the silane coupling agent exceeds 80 g/L, the cohesive force of the chemical treatment coating layer may be insufficient, leading to a decrease in the work adhesion of the paint film layer. The silane coupling agents as described as an example above may be used alone or in combination of two or more.

### [Zirconium compound]

Examples of the zirconium compound include zirconium normal propylate, zirconium normal butyrate, zirconium tetraacetylacetonate, zirconium monoacetylacetonate, zirconium bisacetylacetonate, zirconium monoethylacetoacetate, zirconium acetylacetonate bisethylacetoacetate, zirconium acetate, zirconium monostearate, zirconium carbonate, zirconium ammonium carbonate, potassium zirconium carbonate, sodium zirconium carbonate, and so on. The added amount of the zirconium compound in the chemical treatment solution for forming the chemical treatment coating layer 40 can be set to 2 to 80 g/L, for example. When the added amount of the zirconium compound is less than 2 g/L, the adhesion to the plated surface may be insufficient, leading to a decrease in the work adhesion of the paint film. Further, when the added amount of the zirconium compound exceeds 80 g/L, the cohesive force of the chemical treatment coating layer 40 may be insufficient, leading to a decrease in the work adhesion of the paint film layer. Such zirconium compounds may be used alone or in combination of two or more.

### [Silica]

As the silica, there can be used, for example, commercially available silica gels such as "SNOWTEX N," "SNOWTEX C," "SNOWTEX UP," and "SNOWTEX PS" manufactured by Nissan Chemical Corporation, and "ADELITE AT-20Q" manufcturead by ADEKA CORPORATION, or powdered silica such as AEROSIL #300 manufactured by NIPPON AEROSIL CO., LTD., or ones equivalent to these pieces of commercially available silica. The silica can be appropriately selected according to the required performance of the pre-painted plated steel sheet. The added amount of the silica in the chemical treatment solution for forming the chemical treatment coating layer 40 is preferably set to, for example, 1 to 40 g/L. When the added amount of the silica is less than 1 g/L, the work adhesion of the coating layer may decrease, and when the added amount of the silica exceeds 40 g/L, the effects of work adhesion and corrosion resistance are likely to be saturated, which is uneconomical.

### [Phosphoric acid and Its salt]

Examples of the phosphoric acid and its salt include phosphoric acids such as orthophosphoric acid, metaphosphoric acid, pyrophosphoric acid, triphosphoric acid, and tetraphosphoric acid and salts thereof, ammonium salts such as triammonium phosphate and diammonium hydrogen phosphate, phosphonic acids such as aminotri(methylenephosphonic acid), 1-hydroxyethylidene-1,1-diphosphonic acid, ethylenediaminetetra(methylenephosphonic acid), and diethylenetriaminepenta(methylenephosphonic acid) and salts thereof, organic phosphoric acids such as phytic acid and salts thereof, and so on. Incidentally, as salts of phosphoric acid other than ammonium salts, there can be cited metal salts with Na, Mg, Al, K, Ca, Mn, Ni, Zn, Fe, and so on. The phosphoric acid and its salt may be used alone or in combination of two or more.

Incidentally, the content of the phosphoric acid and its salt is preferably 0 mass% or more and more preferably 1 mass% or more relative to the coating solid content, for example. Further, the content of the phosphoric acid and its salt is preferably 20 mass% or less and more preferably 10 mass% or less relative to the coating solid content, for example. When the content of the phosphoric acid and its salt exceeds 20 mass%, the coating becomes brittle and the work followability of the coating when the surface-treated steel sheet 1 is molded may decrease.

### [Fluoride]

Examples of the fluoride include ammonium zirconium fluoride, ammonium silicofluoride, ammonium titanium fluoride, sodium fluoride, potassium fluoride, calcium fluoride, lithium fluoride, titanium hydrofluoride, zirconium hydrofluoride, and so on. Such fluorides may be used alone or in combination of two or more.

Incidentally, the content of the fluoride is preferably 0 mass% or more and more preferably 1 mass% or more relative to the coating solid content, for example. Further, the content of the fluoride is preferably 20 mass% or less and more preferably 10 mass% or less relative to the coating solid content, for example. When the content of the fluoride exceeds 20 mass%, the coating becomes brittle and the work followability of the coating when the surface-treated steel sheet 1 is molded may decrease.

### [Vanadium compound]

Examples of the vanadium compound include vanadium compounds obtained by reducing pentavalent vanadium compounds such as vanadium pentoxide, metavanadic acid, ammonium metavanadate, sodium metavanadate, and vanadium oxytrichloride to 2 to 4 valences with a reducing agent, vanadium compounds with oxidation numbers of 4 to 2 valences, such as vanadium trioxide, vanadium dioxide, vanadium oxysulfate, vanadium oxyoxalate, vanadium oxyacetylacetonate, vanadium acetylacetonate, vanadium trichloride, phosphovanadomolybdic acid, vanadium sulfate, vanadium dichloride, and vanadium oxide, and so on. Such vanadium compounds may be used alone or in combination of two or more.

Incidentally, the content of the vanadium compound is preferably 0 mass% or more and more preferably 1 mass% or more relative to the coating solid content, for example. Further, the content of the vanadium compound is preferably 20 mass% or less and more preferably 10 mass% or less relative to the coating solid content, for example. When the content of the vanadium compound exceeds 20 mass%, the coating becomes brittle and the work followability of the coating when the surface-treated steel sheet 1 is molded may decrease.

### [Tannin or tannic acid]

As the tannin or tannic acid, hydrolyzable tannin and condensed tannin both can be used. Examples of the tannin and the tannic acid include hamamelitannin, gall tannin, gallnut tannin, myrobalan tannin, divi-divi tannin, algarovilla tannin, valonia tannin, catechin, and so on. The added amount of the tannin or tannic acid in the chemical treatment solution for forming the chemical treatment coating 40 can be set to 2 to 80 g/L. When the added amount of the tannin or tannic acid is less than 2 g/L, the adhesion to the plated surface may be insufficient, leading to a decrease in the work adhesion of the paint film. Further, when the added amount of the tannin or tannic acid exceeds 80 g/L, the cohesive force of the chemical treatment coating may be insufficient, leading to a decrease in the work adhesion of the paint film.

Further, acid, alkali, or the like may be added to the chemical treatment solution for forming the chemical treatment coating layer 40 in order to adjust pH within a range that does not impair the performance.

Such a chemical treatment solution containing various components as described above is applied to one surface or both surfaces of the steel sheet 10, and then dried to form the chemical treatment coating layer 40. In the surface-treated steel sheet 1 according to this embodiment, it is preferable to form the chemical treatment coating layer 40 of 10 mg/m² or more per side on the plating layer 20. The coating weight of the chemical treatment coating layer 40 is more preferably 20 mg/m² or more and further preferably 50 mg/m² or more. Further, in the surface-treated steel sheet 1 according to this embodiment, it is preferable to form the chemical treatment coating layer 40 of 1000 mg/m² or less per side on the plating layer 20. The coating weight of the chemical treatment coating layer 40 is more preferably 800 mg/m² or less and further preferably 600 mg/m² or less. Incidentally, the film thickness of the chemical treatment coating layer 40 corresponding to such a coating weight is about 0.01 to 1 µm, depending on the components contained in the chemical treatment solution. Incidentally, the film thickness of such a chemical treatment coating layer 40 can be measured by cross-sectional observation, similarly to the film thickness of the colored coating layer 30.

### EXAMPLE

The surface-treated steel sheet 1 according to the present invention will be specifically explained below with reference to examples and comparative examples. Incidentally, the examples to be explained below are merely examples of the surface-treated steel sheet 1 according to the present invention, and the surface-treated steel sheet 1 according to the present invention is not limited to the examples below.

### (1) Plated steel sheet

Five types of metal sheets of Al to A5, illustrated in Table 1 below, were prepared. A steel sheet having a sheet thickness of 0.7 mm was used as the base material for the plated metal sheets. Further, plated steel sheets obtained by applying 60 mg/m² of chromate-free chemical treatment (CT-E300/manufactured by Nihon Parkerizing Co., Ltd.) to these metal sheets were also prepared. A treatment solution used for the chemical treatment contains a silane coupling agent as its component, and a coating layer formed by such a chemical treatment functions as the chemical treatment coating layer. Incidentally, whether the chemical treatment was applied or not applied was illustrated in Table 6 and Table 7 below.

### (2) Preparation of color paint

Color paints to be used for forming the colored coating layer were prepared. As a binder resin functioning as the film-forming component, ones equivalent to the resins illustrated in Table 2 below were prepared. For each of resin solutions, a melamine-based curing agent (one equivalent to CYMEL 303/manufactured by Allnex Co., Ltd.) was prepared as the curing agent at a solid content proportion of 30 mass%. Further, ones equivalent to the particles illustrated in Table 3 below were prepared as the resin particles. Further, as the color pigment, ones equivalent to the aluminum pigment, titanium oxide, and carbon black (CB) illustrated in Table 4 below were prepared. Further, as the anti-corrosive pigment, the compounds illustrated in Table 5 below were prepared. These paint components were blended with predetermined particle diameters and in predetermined amounts illustrated in Tables 6 and 7 below to prepare color paints.

### (3) Sample fabrication

The color paints prepared as described above were applied to both surfaces of the plated steel sheets using a roll coater, and the plated steel sheets were heated so as to reach a peak metal temperature (PMT) of 200°C, thereby forming the colored coating layers. Incidentally, the thicknesses of the fabricated colored coating layers were measured by the cross-sectional observation in line with the method explained previously, and the obtained results were illustrated in Table 6 and Table 7. Incidentally, in Table 6 and Table 7, "EQUAL TO OR MORE THAN FILM THICKNESS PROPORTION (%)" means, in the colored coating layer 30a, the proportion (%) of the number of resin particles 303 having the thickness Ga (Ga ≥ Ta) that is equal to or more than the film thickness Ta of the colored coating layer 30a, and means, in the colored coating layer 30b, the proportion (%) of the number of resin particles 303 having the thickness Gb (Gb ≥ Tb) that is equal to or more than the film thickness Tb of the colored coating layer 30b.

### (4) Sample evaluation

Regarding each of the samples fabricated by the above-described method, performances were evaluated based on the following criteria. The obtained evaluation results were illustrated collectively in Table 8 below.

### <Surface contact scratch resistance>

Surface contact scratch resistance was evaluated by the following method. The prepared sample was cut into two 50 mm square pieces, and one of the pieces was fixed with the colored coating layer 30a facing upward. The other piece was placed on the one piece with the colored coating layer 30b facing downward, and after rotating 90 degrees under pressure at 8.5 kgf/cm² (1 kgf is about 9.8 N), the state of the colored coating layer 30a was evaluated based on the following criteria, with a score of 2 or higher being considered a pass.

Evaluation criteria for surface contact scratch resistance
5: Almost no paint film peeling is observed and some or no change in gloss due to pressure is observed.
4: Very slight paint film peeling is observed and some change in gloss due to pressure is observed.
3: Slight paint film peeling is observed and some change in gloss due to pressure is observed.
2: Slight paint film peeling is observed and change in gloss due to pressure is observed.
1: Paint film peeling is observed and significant change in gloss due to pressure is observed.

### <Corrosion resistance>

Corrosion resistance was evaluated based on the following criteria. After an end surface of a test sheet was sealed with tape, a salt spray test (SST) in accordance with JIS Z 2371 was performed for 72 hours, and the occurrence of rust was observed and evaluated based on the following criteria, with a score of 2 or higher being considered a pass.

### Evaluation criteria for corrosion resistance

5: An area where white rust occurred is less than 1% and no red rust occurs.
4: An area where white rust occurred is 1% or more and less than 3% and no red rust occurs.
3: An area where white rust occurred is 3% or more and less than 4% and no red rust occurs.
2: An area where white rust occurred is 4% or more and less than 5% and no red rust occurs.
1: An area where white rust occurred is 5% or more or red rust occurs.

### <Scratch resistance>

As a reference performance, scratch resistance was evaluated by the following coin scratch test. A coin was brought into contact with the colored coating layer 30a of the fabricated sample in a tilted state at an angle of 45 degrees and scratched with a load of 500 g. The scratches made with each load were evaluated based on the following criteria, with a score of 2 or higher being considered a pass.

### Evaluation criteria for scratch resistance

5: No paint film peeling or change in gloss is observed.
4: No paint film peeling is observed but slight change in gloss is observed.
3: Slight paint film peeling is observed and change in gloss is observed.
2: Paint film peeling is partially observed and change in gloss is observed.
1: A paint film has been peeled off completely.

### <Pressure mark resistance>

As a reference performance, pressure mark resistance was evaluated based on the following criteria. The fabricated sample was cut into one 70 mm square piece and one 50 mm square piece. The 70 mm square sample was fixed with the colored coating layer 30a facing upward, and the 50 mm square sample was placed on the 70 mm square sample with the colored coating layer 30b facing downward, and then pressurized at 50°C and 10 MPa for 5 minutes. After the two samples were separated, the state of the colored coating layer 30a of the 70 mm square sample was evaluated based on the following criteria, with a score of 2 or higher being considered a pass.

### Evaluation criteria for pressure mark resistance

4: Completely invisible when observed from the front and from an oblique position.
3: Not visible when observed from the front, but change in gloss in a pressed portion is slightly visible when observed from an oblique position.
2: Not visible when observed from the front, but change in gloss in a pressed portion is visible when observed from an oblique position.
1: Visible when observed from the front, or change in gloss over the entire pressed portion is visible when observed from an oblique position.

### <Work adhesion>

As a reference performance, work adhesion was evaluated based on the following criteria. The fabricated sample was bent 90° with an inner radius of 1 mm in an atmosphere at 20°C, and then a tape peeling test was performed on the outer side of a bent portion. The appearance of a tape peeled portion was evaluated based on the following criteria, with a score of 2 or higher being considered a pass.

### Evaluation criteria for work adhesion

4: Almost no paint film peeling is observed.
3: Slight paint film peeling is observed.
2: Paint film peeling is partially observed.
1: Paint film peeling is observed entirely.

**[Table 1]**

| TYPE | METAL SHEET |
|---|---|
| A1 | HOT-DIP Zn-11%Al-3%Mg-0.2%Si PLATED STEEL SHEET |
| A2 | HOT-DIP Zn-6%Al-3%Mg PLATED STEEL SHEET (Hv140) |
| A3 | HOT-DIP GALVANIZED STEEL SHEET |
| A4 | ALLOYED HOT-DIP GALVANIZED STEEL SHEET (Fe: 10%) |
| A5 | ZINC SHEET |

**[Table 2]**

| TYPE | BINDER RESIN |
|---|---|
| B1 | "MD-1480" MANUFACTURED BY TOYOBO CO., LTD. (AQUEOUS POLYESTER RESIN) |
| B2 | "MD-2000" MANUFACTURED BY TOYOBO CO., LTD. (AQUEOUS POLYESTER RESIN) |
| B3 | "ALMATEX E208" MANUFACTURED BY MITSUI CHEMICALS, INC. (AQUEOUS ACRYLIC RESIN) |
| B4 | "ALMATEX E255" MANUFACTURED BY MITSUI CHEMICALS, INC. (AQUEOUS ACRYLIC RESIN) |
| B5 | "ALMATEX E271" MANUFACTURED BY MITSUI CHEMICALS, INC. (AQUEOUS ACRYLIC RESIN) |
| B6 | "SUPER FLEX 126" MANUFACTURED BY DKS CO. LTD.Co. (AQUEOUS URETHANE RESIN) |

**[Table 3]**

| TYPE | PARTICLE |
|---|---|
| C1 | "SSX-101" MANUFACTURED BY SEKISUI KASEI CO., LTD. (ACRYLIC RESIN PARTICLE, AVERAGE PARTICLE DIAMETER 1 µm) |
| C2 | "MZ-5HN" MANUFACTURED BY SOKEN CHEMICAL & ENGINEERING CO., LTD. (ACRYLIC RESIN PARTICLE, AVERAGE PARTICLE DIAMETER 5 µm) |
| C3 | "BM30X-8" MANUFACTURED BY SEKISUI KASEI CO., LTD. (ACRYLIC RESIN PARTICLE, AVERAGE PARTICLE DIAMETER 8 µm) |
| C4 | "MZ-12H" MANUFACTURED BY SOKEN CHEMICAL & ENGINEERING CO., LTD. (ACRYLIC RESIN PARTICLE, AVERAGE PARTICLE DIAMETER 12 µm) |
| C5 | "HPS-1000" MANUFACTURED BY TOAGOSEI CO., LTD. (SILICA PARTICLE, AVERAGE PARTICLE DIAMETER 1 µm) |
| C6 | "CHEMIPEARL W800" MANUFACTURED BY MITSUI CHEMICALS, INC. (POLYOLEFIN RESIN PARTICLE, AVERAGE PARTICLE DIAMETER 8 µm) |
| C7 | "P-800T" MANUFACTURED BY NEGAMI CHEMICAL INDUSTRIAL CO., LTD. (URETHANE RESIN PARTICLE, AVERAGE PARTICLE DIAMETER 6 µm) |
| C8 | MIX C1 AND C2 TO HAVE AVERAGE PARTICLE DIAMETER 2 µm |
| C9 | MIX C2 AND C3 TO HAVE AVERAGE PARTICLE DIAMETER 6 µm |

**[Table 4]**

| TYPE | COLOR PIGMENT |
|---|---|
| D1 | TITANIUM OXIDE "2R-780" MANUFACTURED BY ISHIHARA SANGYO KAISHA, LTD. |
| D2 | CARBON BLACK "MCF #850" MANUFACTURED BY MITSUBISHI CHEMICAL CORPORATION |
| D3 | MIX D2 AND D3 AT 3:1 (MASS%) |

**[Table 5]**

| TYPE | RUST PREVENTIVE PIGMENT |
|---|---|
| E1 | ALUMINUM DIHYDROGEN TRIPOLYPHOSPHATE |
| E2 | CALCIUM VANADATE |
| E3 | MIX E1 AND E2 AT 1: 1 (MASS%) |

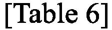

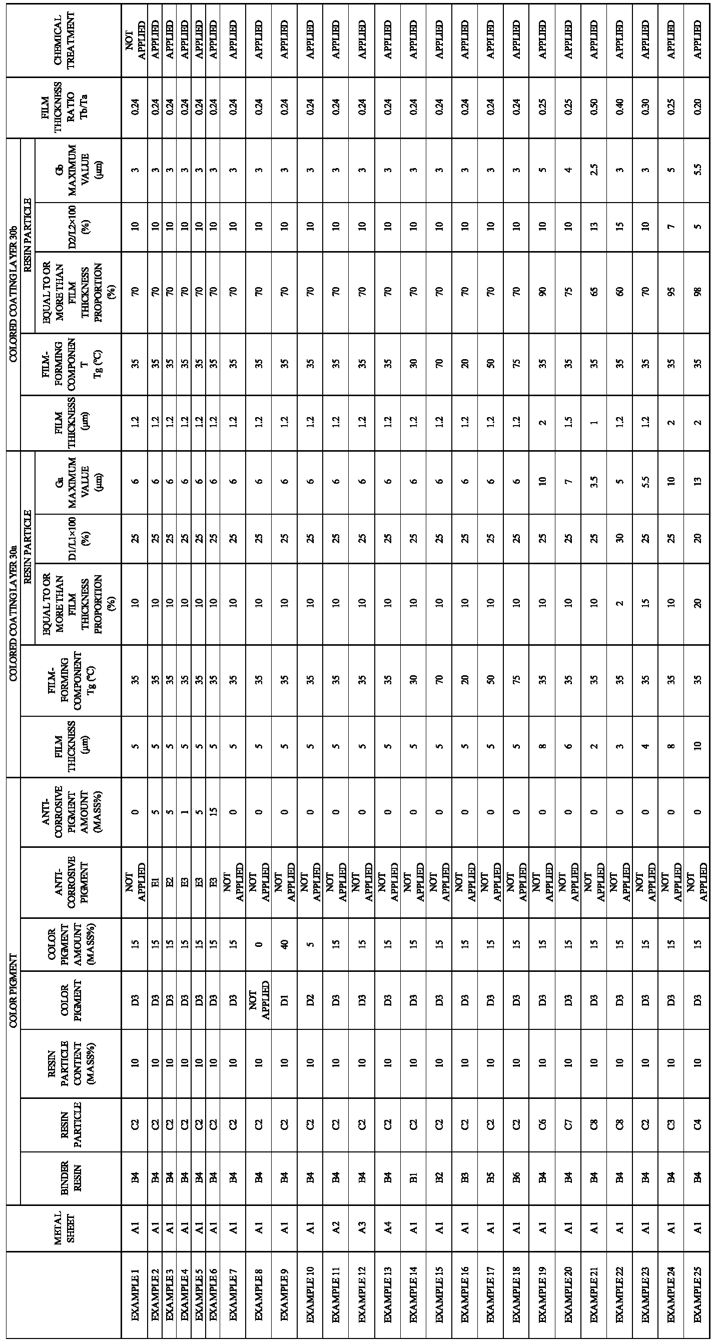

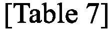

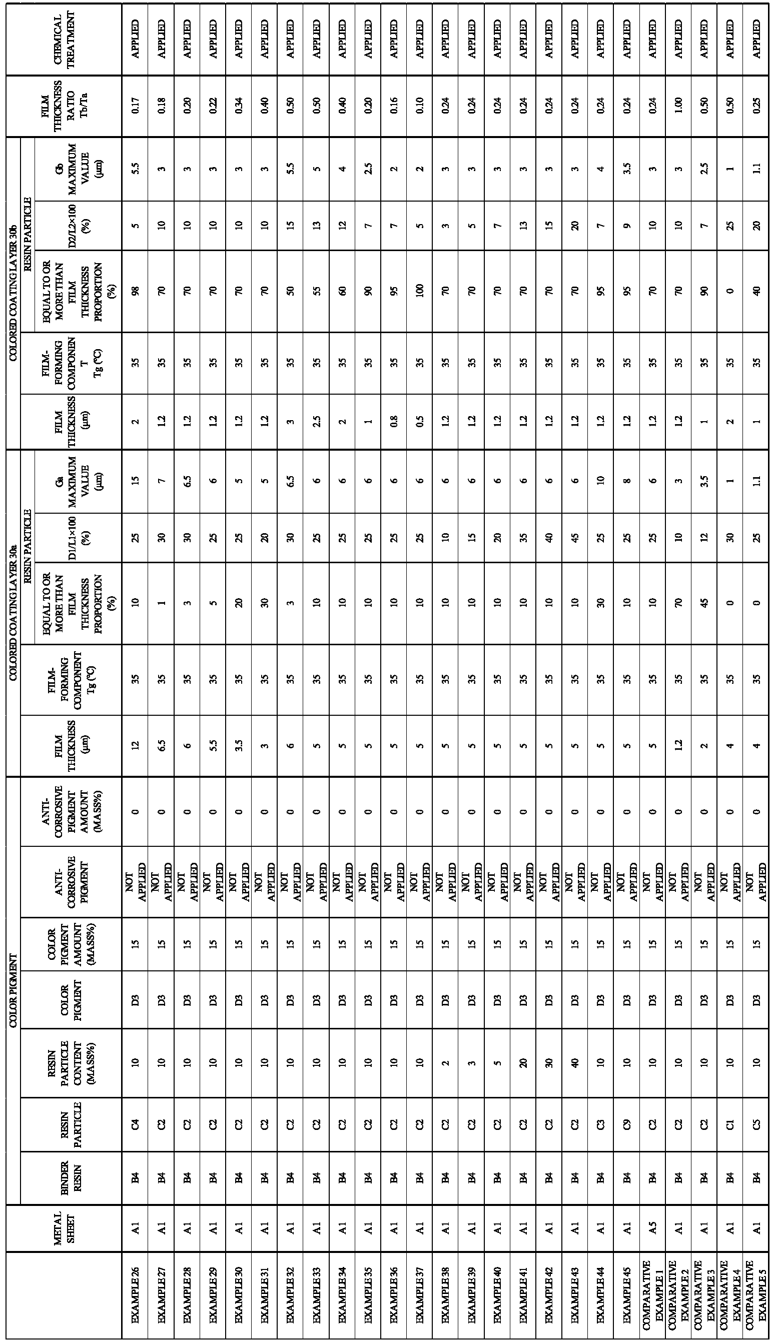

**[Table 8]**

| | SURFACE CONTACT SCRATCH RESISTANCE | CORROSION RESISTANCE | SCRATCH RESISTANCE | PRESSURE MARK RESISTANCE | WORK ADHESION |
|---|---|---|---|---|---|
| EXAMPLE 1 | 4 | 2 | 4 | 4 | 2 |
| EXAMPLE 2 | 4 | 5 | 4 | 4 | 4 |
| EXAMPLE 3 | 4 | 5 | 4 | 4 | 4 |
| EXAMPLE 4 | 4 | 5 | 4 | 4 | 4 |
| EXAMPLE 5 | 4 | 5 | 4 | 4 | 4 |
| EXAMPLE 6 | 4 | 5 | 4 | 4 | 4 |
| EXAMPLE 7 | 4 | 4 | 4 | 4 | 4 |
| EXAMPLE 8 | 4 | 4 | 4 | 4 | 4 |
| EXAMPLE 9 | 4 | 4 | 4 | 4 | 4 |
| EXAMPLE 10 | 4 | 4 | 4 | 4 | 4 |
| EXAMPLE 11 | 4 | 4 | 4 | 4 | 4 |
| EXAMPLE 12 | 4 | 2 | 4 | 4 | 4 |
| EXAMPLE 13 | 4 | 2 | 4 | 4 | 2 |
| EXAMPLE 14 | 4 | 4 | 3 | 4 | 4 |
| EXAMPLE 15 | 5 | 4 | 5 | 4 | 4 |
| EXAMPLE 16 | 2 | 4 | 3 | 2 | 4 |
| EXAMPLE 17 | 5 | 4 | 5 | 4 | 4 |
| EXAMPLE 18 | 4 | 4 | 4 | 4 | 2 |
| EXAMPLE 19 | 2 | 4 | 2 | 4 | 2 |
| EXAMPLE 20 | 2 | 4 | 2 | 4 | 2 |
| EXAMPLE 21 | 2 | 3 | 2 | 4 | 4 |
| EXAMPLE 22 | 3 | 3 | 3 | 4 | 4 |
| EXAMPLE 23 | 4 | 4 | 4 | 4 | 4 |
| EXAMPLE 24 | 4 | 4 | 4 | 4 | 4 |
| EXAMPLE 25 | 4 | 4 | 4 | 3 | 3 |
| EXAMPLE 26 | 4 | 4 | 4 | 2 | 3 |
| EXAMPLE 27 | 4 | 4 | 4 | 2 | 4 |
| EXAMPLE 28 | 4 | 4 | 4 | 3 | 4 |
| EXAMPLE 29 | 4 | 4 | 4 | 4 | 4 |
| EXAMPLE 30 | 4 | 4 | 3 | 4 | 4 |
| EXAMPLE 31 | 4 | 4 | 2 | 4 | 4 |
| EXAMPLE 32 | 2 | 4 | 4 | 4 | 4 |
| EXAMPLE 33 | 3 | 4 | 4 | 4 | 4 |
| EXAMPLE 34 | 4 | 4 | 4 | 4 | 4 |
| EXAMPLE 35 | 4 | 4 | 4 | 4 | 4 |
| EXAMPLE 36 | 4 | 4 | 4 | 3 | 4 |
| EXAMPLE 37 | 4 | 4 | 4 | 2 | 4 |
| EXAMPLE 38 | 2 | 4 | 2 | 4 | 4 |
| EXAMPLE 39 | 3 | 4 | 3 | 4 | 4 |
| EXAMPLE 40 | 4 | 4 | 4 | 4 | 4 |
| EXAMPLE 41 | 4 | 4 | 4 | 4 | 4 |
| EXAMPLE 42 | 4 | 3 | 4 | 4 | 4 |
| EXAMPLE 43 | 4 | 2 | 4 | 4 | 3 |
| EXAMPLE 44 | 3 | 4 | 3 | 4 | 2 |
| EXAMPLE 45 | 4 | 4 | 4 | 4 | 3 |
| COMPARATIVE EXAMPLE 1 | 4 | 1 | 4 | 4 | 4 |
| COMPARATIVE EXAMPLE 2 | 1 | 2 | 2 | 4 | 2 |
| COMPARATIVE EXAMPLE 3 | 1 | 3 | 2 | 4 | 2 |
| COMPARATIVE EXAMPLE 4 | 1 | 4 | 3 | 1 | 4 |
| COMPARATIVE EXAMPLE 5 | 1 | 4 | 2 | 4 | 4 |

As is clear from Table 8 above, the samples corresponding to the example of the present invention exhibited excellent resistance to surface contact scratches and also exhibited excellent corrosion resistance, whereas the samples corresponding to the comparative example of the present invention were inferior in the evaluation of either the resistance to surface contact scratches or the corrosion resistance, and did not achieve both resistance to surface contact scratches and corrosion resistance.

The preferred embodiment of the present invention has been described in detail above with reference to the attached drawings, but the present invention is not limited to such an example. It is apparent that a person having common knowledge in the technical field to which the present invention belongs is able to devise various variation or modification examples within the range of technical ideas described in the claims, and it should be understood that such examples belong to the technical scope of the present invention as a matter of course.

The embodiment disclosed herein is an example in all respects and should not be considered to be restrictive. The above-described embodiment may be omitted, substituted, or modified in various forms without departing from the scope of the appended claims and the configuration and gist that fall within the technical scope of the present invention as described below. For example, configuration requirements of the above-described embodiment can be arbitrarily combined within a range that does not impair the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not restrictive. That is, the technique relating to the present invention can offer other clear effects to those skilled in the art from the description herein in addition to or in place of the above-described effects.

Note that the following configuration also belongs to the technical scope of the present invention.
(1) A surface-treated steel sheet includes:
   zinc-containing plating layers located on both surfaces of a steel sheet;
   a first colored coating layer located on the plating layer on one surface of the steel sheet; and
   a second colored coating layer located on the plating layer on the other surface of the steel sheet, in which
   the ratio of a film thickness of the second colored coating layer to a film thickness of the first colored coating layer is 0.1 or more and 0.5 or less,
   the first colored coating layer and the second colored coating layer contain resin particles, and
   when observing a cross section of the first colored coating layer cut in a thickness direction,
   the length of the observed resin particle in the film thickness direction of the first colored coating layer is set as the thickness of the resin particle,
   and then, the proportion of the number of the resin particles having a thickness equal to or more than the film thickness of the first colored coating layer to the number of all of the observed resin particles is 1% or more and 30% or less, and
   when observing a cross section of the second colored coating layer cut in the thickness direction,
   the length of the observed resin particle in the film thickness direction of the second colored coating layer is set as the thickness of the resin particle,
   and then, the proportion of the number of the resin particles having a thickness equal to or more than the film thickness of the second colored coating layer to the number of all of the observed resin particles is 50% or more and 100% or less.
(2) The surface-treated steel sheet according to (1), in which when the first colored coating layer is observed in cross section, a length of 1000 µm in a direction orthogonal to the film thickness direction of the first colored coating layer is set as a first observation length, and when the sum of lengths, each of the lengths in a direction orthogonal to the film thickness direction of a portion corresponding to the resin particle when the portion occupied by the resin particle within the range of the first observation length is projected in the film thickness direction, is set as a first occupation length, the proportion of the first occupation length to the first observation length is 15% or more and 40% or less, and
   when the second colored coating layer is observed in cross section, a length of 1000 µm in a direction orthogonal to the film thickness direction of the second colored coating layer is set as a second observation length, and when the sum of lengths, each of the lengths in a direction orthogonal to the film thickness direction of a portion corresponding to the resin particle when the portion occupied by the resin particle within the range of the second observation length is projected in the film thickness direction, is set as a second occupation length, the proportion of the second occupation length to the second observation length is 5% or more and 15% or less.
(3) The surface-treated steel sheet according to (1) or (2), in which the film thickness of the first colored coating layer is 3 µm or more and 10 µm or less.
(4) The surface-treated steel sheet according to any one of (1) to (3), in which the thickness of the resin particle contained in the first colored coating layer is less than twice the film thickness of the first colored coating layer, and the thickness of the resin particle contained in the second colored coating layer is less than three times the film thickness of the second colored coating layer.
(5) The surface-treated steel sheet according to any one of (1) to (4), in which the resin particles are acrylic resin particles.
(6) The surface-treated steel sheet according to any one of (1) to (5), in which film-forming components of the first colored coating layer and the second colored coating layer have a glass transition temperature Tg of 30°C or higher and 70°C or lower.
(7) The surface-treated steel sheet according to any one of (1) to (6), further includes: a chemical treatment coating layer between the plating layer on one surface of the steel sheet and the first colored coating layer and a chemical treatment coating layer between the plating layer on the other surface of the steel sheet and the second colored coating layer.
(8) The surface-treated steel sheet according to any one of (1) to (7), in which an average particle diameter of the resin particles is 3 µm or more and 15 µm or less.

### [Explanation of Codes]

1 surface-treated steel sheet
10 steel sheet
20 plating layer
30 colored coating layer
40 chemical treatment coating layer
301 film-forming component
303 resin particle

## Claims

1. A surface-treated steel sheet, comprising:
zinc-containing plating layers located on both surfaces of a steel sheet;
a first colored coating layer located on the plating layer on one surface of the steel sheet; and
a second colored coating layer located on the plating layer on the other surface of the steel sheet, wherein
the ratio of a film thickness of the second colored coating layer to a film thickness of the first colored coating layer is 0.1 or more and 0.5 or less,
the first colored coating layer and the second colored coating layer contain resin particles, and
when observing a cross section of the first colored coating layer cut in a thickness direction,
the length of the observed resin particle in the film thickness direction of the first colored coating layer is set as the thickness of the resin particle,
and then, the proportion of the number of the resin particles having a thickness equal to or more than the film thickness of the first colored coating layer to the number of all of the observed resin particles is 1% or more and 30% or less, and
when observing a cross section of the second colored coating layer cut in the thickness direction,
the length of the observed resin particle in the film thickness direction of the second colored coating layer is set as the thickness of the resin particle,
and then, the proportion of the number of the resin particles having a thickness equal to or more than the film thickness of the second colored coating layer to the number of all of the observed resin particles is 50% or more and 100% or less.

2. The surface-treated steel sheet according to claim 1, wherein
when the first colored coating layer is observed in cross section, a length of 1000 µm in a direction orthogonal to the film thickness direction of the first colored coating layer is set as a first observation length, and when the sum of lengths, each of the lengths in a direction orthogonal to the film thickness direction of a portion corresponding to the resin particle when the portion occupied by the resin particle within the range of the first observation length is projected in the film thickness direction, is set as a first occupation length, the proportion of the first occupation length to the first observation length is 15% or more and 40% or less, and
when the second colored coating layer is observed in cross section, a length of 1000 µm in a direction orthogonal to the film thickness direction of the second colored coating layer is set as a second observation length, and when the sum of lengths, each of the lengths in a direction orthogonal to the film thickness direction of a portion corresponding to the resin particle when the portion occupied by the resin particle within the range of the second observation length is projected in the film thickness direction, is set as a second occupation length, the proportion of the second occupation length to the second observation length is 5% or more and 15% or less.

3. The surface-treated steel sheet according to claim 1 or 2, wherein
the film thickness of the first colored coating layer is 3 µm or more and 10 µm or less.

4. The surface-treated steel sheet according to claim 1 or 2, wherein
the thickness of the resin particle contained in the first colored coating layer is less than twice the film thickness of the first colored coating layer, and the thickness of the resin particle contained in the second colored coating layer is less than three times the film thickness of the second colored coating layer.

5. The surface-treated steel sheet according to claim 1 or 2, wherein
the resin particles are acrylic resin particles.

6. The surface-treated steel sheet according to claim 1 or 2, wherein
film-forming components of the first colored coating layer and the second colored coating layer have a glass transition temperature Tg of 30°C or higher and 70°C or lower.

7. The surface-treated steel sheet according to claim 1 or 2, further comprising:
a chemical treatment coating layer between the plating layer on one surface of the steel sheet and the first colored coating layer and a chemical treatment coating layer between the plating layer on the other surface of the steel sheet and the second colored coating layer.

8. The surface-treated steel sheet according to claim 1 or 2, wherein
an average particle diameter of the resin particles is 3 µm or more and 15 µm or less.
